# EUROPEAN PATENT SPECIFICATION

(11) **EP 2 896 845 B1**
(45) Date of publication and mention of the grant of the patent: **29.06.2022**
(21) Application number: 14179753.0
(22) Date of filing: 04.08.2014
(51) Int. Cl.: F16D 1/08, F16D 7/02, F16D 9/06

(54) **Torque limiter**
Drehmomentbegrenzer
Limiteur de couple

(30) Priority: 05.08.2013 JP 2013162593
(43) Date of publication of application: 22.07.2015
(73) Proprietor: JTEKT CORPORATION, Aichi-ken, 448-8652 (JP)
(72) Inventor: KAWATA, Michio, Osaka-shi, Osaka 542-8502 (JP); TOSHIMA, Yoshitsugu, Osaka-shi, Osaka 542-8502 (JP)
(74) Representative: Winter, Brandl - Partnerschaft mbB

(56) References cited:
- EP-A1- 2 241 775
- WO-A1-98/15750
- DE-A1- 4 326 150
- GB-A- 2 023 250
- GB-A- 2 206 181
- JP-A- H0 473 437

## Description

### BACKGROUND OF THE INVENTION

### 1. Field of the Invention

The invention relates to a torque limiter.

### 2. Description of the Related Art

Japanese Patent Application Publication No. 2009-293680 (JP 2009-293680 A) describes a conventional torque limiter. The torque limiter includes a shaft member and a tubular member. The tubular member is rotatably fitted onto the shaft member. The tubular member has a hydraulic pressure expansion chamber, shear valve insertion holes, coupler insertion holes, and pin insertion holes. The hydraulic pressure expansion chamber extends in the axial direction of the tubular member. The hydraulic pressure expansion chamber is connected to a bottom portion of each shear valve insertion hole via an expansion chamber communication path.

The shear valve insertion holes, the coupler insertion holes and the pin insertion holes are open on the outer peripheral face of the tubular member. The shear valve insertion hole, the coupler insertion hole and the pin insertion hole are apart from each other in the circumference of the tubular member. The shear valve insertion holes, the coupler insertion holes and the pin insertion holes are located at the same position in the axial direction of the tubular member.

The coupler insertion hole and the shear valve insertion hole communicate with each other via an oil supply passage. The depth of the shear valve insertion hole in the radial direction is set larger than the depth of the coupler insertion hole in the radial direction. The oil supply passage has a linear shape in a section taken along the radial direction of the tubular member. The oil supply passage has such a shape that the distance between the oil supply passage and the central axis of the tubular member in the radial direction increases in a direction from the shear valve insertion hole toward the coupler insertion hole along the circumferential direction. Due to such a shape of the oil supply passage, even if there is a difference in depth between the coupler insertion hole and the shear valve insertion hole, the oil supply passage is open at a position near the bottom portion of the shear valve insertion hole. Thus, during oil supply, when the shear valve is fastened into the shear valve insertion hole to some extent, the oil that has passed through the oil supply passage is prevented from flowing to the outside through the shear valve insertion hole.

The shear valve is disposed in the shear valve insertion hole. The shear valve has an oil passage (tube) that is open only at one end and that is sealed at the other end. When the shear valve is fitted in the shear valve insertion hole appropriately, the one end of the oil passage of the shear valve communicates with the expansion chamber communication passage. On the other hand, the other end of the oil passage of the shear valve projects radially outward from the outer peripheral face of the tubular member.

The shaft member has a shear valve shearing portion having an L-shaped section. The shear valve shearing portion has a disc portion and an axially extending portion. The disc portion extends radially outward from the outer peripheral face of the shaft member. The disc portion is opposed to an axial end face of the tubular member in the axial direction. The axially extending portion extends in the axial direction from a radially outer side end portion of the disc portion. The axially extending portion extends along the outer peripheral face of the tubular member, and is opposed to the outer peripheral face of the tubular member in the radial direction.

After a prescribed amount of oil is introduced into the hydraulic pressure expansion chamber via the oil supply passage, a prescribed hydraulic pressure is generated in the hydraulic pressure expansion chamber by fixedly fastening the shear valve into the shear valve fitting hole. As a result, the inner peripheral face of the tubular member is expanded radially inward, so that the inner peripheral face of the tubular member is pressed against the outer peripheral face side of the shaft member. Thus, the inner peripheral face of the tubular member and the outer peripheral face of the shaft member are frictionally engaged with each other.

When a torque higher than expected is applied between the shaft member and the tubular member and thus the tubular member rotates in the circumferential direction relative to the shaft member, the axially extending portion rotates in the circumferential direction relative to the tubular member. Thus, the other end portion of the oil passage of the shear valve, the other end portion being located on the sealing side, is sheared by the axially extending portion. In this way, the oil in the hydraulic pressure expansion chamber is discharged to the outside via the sheared other end portion of the shear valve to cancel the frictional engagement between the tubular member and the shaft member.

As described above, in the torque limiter, the oil introduced through the oil supply passage during oil supply from flowing to the outside through the shear valve insertion hole. Thus, the oil supply passage needs to be formed into such a shape that the distance in the radial direction from the central axis of the tubular member to the oil supply passage increases in a direction from the shear valve insertion hole toward the coupler insertion hole along the circumferential direction.

Thus, because the direction in which the oil supply passage extends is not such a direction that formation of the oil supply passage is easy, such as the axial direction or the radial direction, it is difficult to form the oil supply passage. As a result, the machining accuracy may be reduced and the manufacturing cost of the oil supply passage may increase. In addition, because it is difficult to form the oil supply passage, it may be impossible to form the oil supply passage depending on the size of the tubular member.

In the torque limiter, it is necessary to form the shear valve shearing portion having an L-shaped section on the shaft member in order to shear the other end portion of the shear valve. Thus, manufacturing cost increases due to the material cost and manufacturing cost of the shear valve shearing portion, and at the same time, the size of the torque limiter increases.

Document GB 2 023 250 A discloses a torque limiter comprising a shaft member; and a tubular member rotatably fitted on the shaft member, wherein the tubular member has a fluid pressure expansion chamber for pressing an inner peripheral face of the tubular member against an outer peripheral face of the shaft member, a shear valve fitting hole that is open on an axial end face of the tubular member in an axial direction of the tubular member, and extends in the axial direction, a liquid charging passage that communicates with the plurality of shear valve fitting holes via the fluid pressure expansion chamber, that extends in a radial direction of the tubular member from the fluid pressure expansion chamber to an outer peripheral face of the tubular member, and that opens on the outer peripheral face of the tubular member, an expansion chamber communication passage that provides communication between the shear valve fitting hole and the fluid pressure expansion chamber, and a shear valve has a tube, one end portion of which communicates with the expansion chamber communication passage and the other end portion of which is sealed, the tube projecting outward in the axial direction from the axial end face of the tubular member, and the shear valve being fitted in the shear valve fitting hole, and the shaft member has a tube shearing portion that is located on a circle, which extends along a circumferential direction of the shaft member and on which the other end portion of the tube is located, the tube shearing portion being overlapped with the other end portion of the tube in the circumferential direction of the shaft member, so as to interfere with the other axial end portion of the tube due to their relative movement, when a load equal to or higher than a prescribed value is applied to the tubular member or the shaft member.

### SUMMARY OF THE INVENTION

One object of the invention is to provide a compact torque limiter having a configuration that makes it possible to reduce the manufacturing cost of a liquid charging passage and the production cost of a shearing portion for a shear valve.

An aspect of the invention relates to a torque limiter including: a shaft member; and a tubular member rotatably fitted on the shaft member. The tubular member has: a fluid pressure expansion chamber for pressing an inner peripheral face of the tubular member against an outer peripheral face of the shaft member; a plurality of shear valve fitting holes that are open on an axial end face of the tubular member in an axial direction of the tubular member, and that extend in the axial direction; a plurality of liquid charging passages that communicate with the shear valve fitting holes, that extend in a radial direction of the tubular member from the shear valve fitting hole to an outer peripheral face of the tubular member, and that open on the outer peripheral face of the tubular member; a plurality of expansion chamber communication passages that provides communication between the shear valve fitting hole and the fluid pressure expansion chamber; and a plurality of shear valves each of which has a tube one end portion of which communicates with the expansion chamber communication passage and the other end portion of which is sealed, the tube projecting outward in the axial direction from the axial end face of the tubular member, and the plurality of shear valves being fitted in the shear valve fitting holes. The shaft member has a tube shearing portion that is located on a circle, which extends along a circumferential direction of the shaft member and on which the other end portion of the tube is located. The tube shearing portion is overlapped with the other end portion of the tube in the circumferential direction of the shaft member so as to interfere with the other axial end portion of the tube due to their relative movement, when a load equal to or higher than a prescribed value is applied to the tubular member or the shaft member.

### BRIEF DESCRIPTION OF THE DRAWINGS

The foregoing and further features and advantages of the invention will become apparent from the following description of example embodiments with reference to the accompanying drawings, wherein like numerals are used to represent like elements and wherein:
FIG. 1 is a sectional view schematically illustrating a torque limiter according to a first embodiment of the invention, taken along the axial direction of the torque limiter;
FIG. 2 illustrates a part of a schematic sectional view of the torque limiter, taken along a plane extending in the radial direction of the torque limiter and passing through a flange of a shaft member and the other axial end portion of a tube; and
FIG. 3 illustrates a part of a schematic sectional view of a torque limiter according to a second embodiment of the invention, FIG. 3 corresponding to FIG. 2.

### DETAILED DESCRIPTION OF EMBODIMENTS

Hereinafter, example embodiments of the invention will be described in detail with reference to the accompanying drawings.

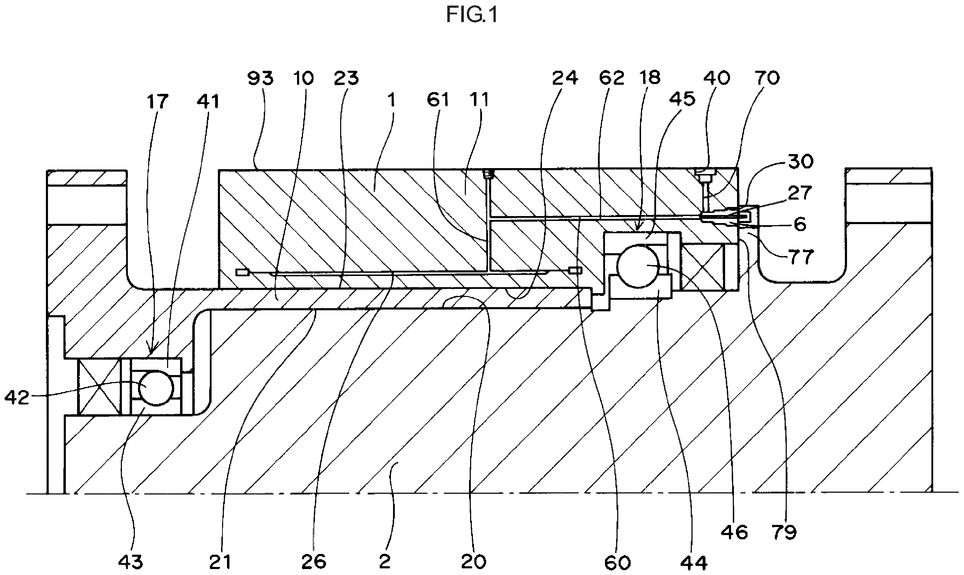

FIG. 1 is a sectional view schematically illustrating a torque limiter according to a first embodiment of the invention, taken along the axial direction of the torque limiter.

The torque limiter includes a tubular member 1, a shaft member 2, a first ball bearing 17 and a second ball bearing 18.

The tubular member 1 includes a first tubular member 10 and a second tubular member 11. The first tubular member 10 has a generally cylindrical inner peripheral face 21 that contacts an outer peripheral face 20 of the shaft member 2. Lubrication oil (e.g. traction oil, turbine oil) for preventing seizure is present between the outer peripheral face 20 of the shaft member 2 and the inner peripheral face 21 of the first tubular member 10. The second tubular member 11 has a generally cylindrical inner peripheral face 24 that contacts a generally cylindrical outer peripheral face 23 of the first tubular member 10. The second tubular member 11 has an annular hydraulic pressure expansion chamber 26, which may function as a fluid pressure expansion chamber, a plurality of shear valve fitting holes 30, a plurality of oil supply holes 40, a plurality of expansion chamber communication passages 60, and a plurality of oil supply hole communication passages 70.

The hydraulic pressure expansion chamber 26 extends generally in the axial direction of the shaft member 2 over a prescribed axial length along the inner peripheral face 24 of the second tubular member 11. The shear valve fitting holes 30 are located so as to be apart from each other in the circumferential direction, for example, located at equal intervals in the circumferential direction. As illustrated in FIG. 1, each of the shear valve fitting holes 30 extends in the axial direction. Each of the shear valve fitting holes 30 is open on an axial end face 79 of the second tubular member 11, the axial end face 79 being located on the second ball bearing 18 side in the axial direction.

The number of the expansion chamber communication passages 60 is equal to the number of the shear valve fitting holes 30. The expansion chamber communication passages 60 are located so as to be apart from each other in the circumferential direction, for example, located at equal intervals in the circumferential direction. Each of the expansion chamber communication passages 60 provides communication between the hydraulic pressure expansion chamber 26 and an axial end portion of a corresponding one of the shear valve fitting holes 30, the axial end portion being on the opposite side of the shear valve fitting hole 30 from the axial end face 79-side end portion of the shear valve fitting hole 30. As illustrated in FIG. 1, each of the expansion chamber communication passages 60 has a radially extending passage 61 and an axially extending passage 62. Each of the radially extending passages 61 extends outward in the radial direction of the second tubular member 11 from the hydraulic pressure expansion chamber 26. Each of the axially extending passages 62 provides communication between a radially outer end portion of a corresponding one of the radially extending passages 61 and an axial end portion of a corresponding one of the shear valve fitting holes 30, the axial end portion being on the opposite side of the shear valve fitting hole 30 from the axial end face 79-side end portion of the shear valve fitting hole 30. Each of the axially extending passages 62 extends in the axial direction.

The oil supply holes 40 are located so as to be apart from each other in the circumferential direction, for example, located at equal intervals in the circumferential direction. The number of the oil supply holes 40 is equal to the number of the shear valve fitting holes 30. The phases in the circumferential direction, where the oil supply holes 40 are present, coincide with the phases in the circumferential direction, where the shear valve fitting holes 30 are present. Each of the oil supply holes 40 extends in the radial direction, and is open on an outer peripheral face 93 of the second tubular member 11. Although not described in detail, an oil supply device such as a known coupler (not illustrated) may be connected to each of the oil supply holes 40.

The oil supply hole communication passages 70 are located so as to be apart from each other in the circumferential direction, for example, located at equal intervals in the circumferential direction. The number of the oil supply hole communication passages 70 is equal to the number of the shear valve fitting holes 30. The phases in the circumferential direction, where the oil supply hole communication passages 70 are present, coincide with the phases in the circumferential direction, where the shear valve fitting holes 30 are present. Each of the oil supply hole communication passages 70 extends in the radial direction. As illustrated in FIG. 1, each of the oil supply hole communication passages 70 provides communication between the expansion chamber communication passage 60-side axial end portion of a corresponding one of the shear valve fitting holes 30 and a radially inner end portion (bottom portion) of a corresponding one of the oil supply holes 40. The oil supply holes 40 and the oil supply hole communication passages 70 constitute a liquid charging passage.

The tubular member 1 is provided with shear valves 6 of which the number is equal to the number of the shear valve fitting holes 30. The shear valves 6 are screwed into the shear valve fitting holes 30. Each of the shear valves 6 has a tube 27. The tube 27 extends in the axial direction of the second tubular member 11 when the shear valve 6 is screwed into the shear valve fitting hole 30. When the shear valve 6 is screwed into the shear valve fitting hole 30, one axial end portion of the tube 27 communicates with the expansion chamber communication passage 60 and thus communicates with the hydraulic pressure expansion chamber 26 via the expansion chamber communication passage 60. When the shear valve 6 is screwed into the shear valve fitting hole 30, the other axial end portion 85 of the tube 27 projects outward in the axial direction from the axial end face 79 of the second tubular member 11, the axial end face 79 being located on the second ball bearing 18 side in the axial direction. The other axial end portion 85 of the tube 27 is sealed. As illustrated in FIG. 1, the shaft member 2 has an annular flange 77, which may function as an annular projecting portion. The flange 77 extends radially outward along the axial end face 79 of the second tubular member 11.

The first ball bearing 17 includes an inner ring 43, an outer ring 41, and a plurality of balls 42. The inner ring 43 fixedly fitted to an outer peripheral face of the shaft member 2. The outer ring 41 is fixedly fitted to an inner peripheral face of the first tubular member 10. The balls 42 are disposed between a raceway surface of the inner ring 43 and a raceway surface of the outer ring 41. The second ball bearing 18 includes an inner ring 44, an outer ring 45 and a plurality of balls 46. The inner ring 44 is fixedly fitted to an outer peripheral face of the shaft member 2. The outer ring 45 is fixedly fitted to an inner peripheral face of the second tubular member 11. The balls 46 are disposed between a raceway surface of the inner ring 44 and a raceway surface of the outer ring 45. When the shaft member 2 rotates relative to the tubular member 1, the first and second ball bearings 17, 18 support the shaft member 2 such that the shaft member 2 is rotatable relative to the tubular member 1.

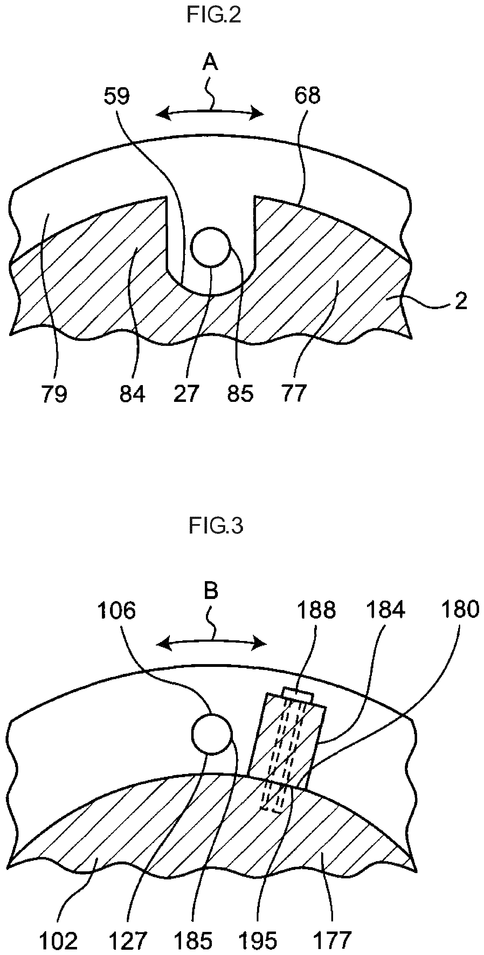

FIG. 2 illustrates a part of a schematic sectional view of the torque limiter, taken along a plane extending in the radial direction of the torque limiter and passing through the flange 77 of the shaft member 2 and the other axial end portion 85 of the tube 27.

As illustrated in FIG. 2, the flange 77 has a tube overlapping portion 84 that is located on a circle, which extends along the circumferential direction of the shaft member 2 indicated by an arrow A in FIG. 2 and on which the other axial end portion 85 of the tube 27 is located. When a load equal to or higher than a prescribed value is applied to the tubular member 1 or the shaft member 2, the tube overlapping portion 84 is overlapped with the other axial end portion 85 of the tube 27 in the circumferential direction of the shaft member 2 so as to interfere with the other axial end portion 85 of the tube 27 due to their relative movement. The tube overlapping portion 84 constitutes a tube shearing portion. As illustrated in FIG. 2, the shaft member 2 has a plurality of bottomed cutouts 59 that are open on an outer peripheral face 68 of the flange 77. Each of the cutouts 59 passes through the flange 77 in the axial direction. The number of the cutouts 59 is equal to the number of the shear valves 6 (see FIG. 1). The other axial end portion 85 of each tube 27 is accommodated in the cutout 59 so as to be apart from the wall face of the cutout 59.

With the above-described configuration, if a load lower than the prescribed value (a load within a range in which torque is transmitted) is applied to the tubular member 1 and the shaft member 2, the diameter of the inner peripheral face 21 of the first tubular member 10 is reduced by the oil, which is used to expand the inner peripheral face 21 of the first tubular member 10 radially inward and which is supplied into the hydraulic pressure expansion chamber 26 via an oil supply device such as a coupler (not illustrated) and then sealed therein. Thus, the inner peripheral face 21 is pressed against the outer peripheral face 20 of the shaft member 2, so that the tubular member 1 and the shaft member 2 are frictionally connected to each other to transmit torque between the tubular member 1 and the shaft member 2.

On the other hand, if a load equal to or higher than the prescribed value (a load higher than the upper limit of the range in which torque is transmitted) is applied to the tubular member 1 or the shaft member 2 and thus the outer peripheral face 20 of the shaft member 2 slips relative to the inner peripheral face 21 of the first tubular member 10 and the relative positions of the tubular member 1 and the shaft member 2 about the axis is changed, the tube overlapping portion 84 of the flange 77 shears the other axial end portion 85 of the tube 27 of the shear valve 6. Thus, the oil is discharged from the hydraulic pressure expansion chamber 26 to the outside via the shear valve 6 of which the other axial end portion 85 has been sheared. As a result, pressing force is no longer applied from the inner peripheral face 21 of the first tubular member 10 to the outer peripheral face 20 of the shaft member 2, so that frictional connection between the tubular member 1 and the shaft member 2 is cancelled to interrupt transmission of the torque. In this way, if an excessive load is applied to the tubular member 1 or the shaft member 2, transmission of the torque is interrupted to protect the expensive apparatus connected to the torque limiter.

According to the first embodiment, each shear valve fitting hole 30 extends in the axial direction of the tubular member 1 and is open on the axial end face 79 of the tubular member 1. With this configuration, the liquid charging passage extends in the radial direction of the tubular member 1 from the shear valve fitting hole 30 to the outer peripheral face of the tubular member 1. Thus, the liquid charging passage extends in the simple radial direction. It is easy to form the liquid charging passage extending in the simple radial direction. Thus, it is possible to form the liquid charging passage considerably easily as compared with the related art. As a result, production cost of the liquid charging passage is reduced. Because the direction in which the liquid charging passage extends is in the simple radial direction, the machining accuracy of the liquid charging passage is increased.

According to the first embodiment, the shear valve fitting hole 30 extends in the axial direction of the tubular member 1 and is open on the axial end face 79 of the tubular member 1. The other axial end portion 85 of the tube 27 of the shear valve 6 fitted in the shear valve fitting hole 30 projects axially outward from the axial end face 79 of the tubular member 1. Thus, in order to shear the shear valve 6, the shaft member 2 just needs to have: a portion that is located on a circle, which extends along the circumferential direction of the shaft member 2 and on which the other axial end portion 85 of the tube 27 is located, and that is overlapped with the other axial end portion 85 of the tube 27 in the circumferential direction of the shaft member 2 when a load equal to or higher than the prescribed value is applied to the tubular member 1 or the shaft member 2; and a portion that is opposed to the axial end face 79 of the tubular member 1. Thus, unlike a conventional torque limiter, it is no longer necessary to form a large shear valve shearing portion having an L-shaped section, which is used to shear the shear valve 6. Consequently, manufacturing cost of the shearing portion for the shear valve 6 is reduced and a compact torque limiter is obtained.

According to the first embodiment, the tube shearing portion is formed just by forming the cutout 59 in the flange 77, which may function as the annular projecting portion. Thus, the tube shearing portion is formed easily to reduce the manufacturing cost of the tube cutting portion, and a compact torque limiter is obtained.

In the first embodiment, the cutout 59 that passes through the flange 77 in the axial direction is formed in the flange 77. However, in the invention, a cutout formed in the annular projecting portion may be open only at one side in the axial direction.

In the torque limiter in the first embodiment, the tubular member 1 is formed of the first tubular member 10 having the inner peripheral face 21 that contacts the outer peripheral face 20 of the shaft member 2 and the second tubular member 11 having the hydraulic pressure expansion chamber 26 in which the oil is sealed. However, in the invention, the tubular member may be a single-piece tubular member that has an inner peripheral face that contacts the outer peripheral face of the shaft member and a hydraulic pressure expansion chamber in which the oil is sealed.

In the torque limiter in the first embodiment, the hydraulic pressure expansion chamber 26 has an annular shape. However, in the invention, the hydraulic pressure expansion chamber used to press the inner peripheral face of the tubular member against the outer peripheral face of the shaft member may have a non-annular shape.

In the first embodiment, formation of the cutout 59 in the flange 77, which may function as the annular projecting portion, makes it possible to shear the tube 27. However, in the invention, a configuration without a cutout may be adopted to make it possible to shear the tube.

FIG. 3 illustrates a part of a schematic sectional view of a torque limiter according to a second embodiment of the invention, FIG. 3 corresponding to FIG. 2.

According to the second embodiment, as illustrated in FIG. 3, a shaft member 102 has an annular flange 177, which may function as an annular projecting portion, and a plurality of non-annular projecting portions 184. Each of the non-annular projecting portions 184 projects radially outward from the flange 177. As illustrated in FIG. 3, the flange 177 is located radially inward of the other axial end portion 185 of the tube 127 and is apart in the radial direction from the other axial end portion 185 of the tube 127.

As illustrated in FIG. 3, the non-annular projecting portion 184 that is located on a circle, which extends along the circumferential direction of the shaft member 102 indicated by an arrow B in FIG. 3 and on which the other axial end portion 185 of the tube 127 is located. When a load equal to or higher than a prescribed value is applied to the tubular member or the shaft member 102, the non-annular projecting portion 184 is overlapped with the other axial end portion 185 of the tube 127 in the circumferential direction of the shaft member 102 so as to interfere the other axial end portion 185 of the tube 127. As illustrated in FIG. 3, the non-annular projecting portion 184 may be located apart from the other axial end portion 185 of the tube 127 in the circumferential direction.

In the second embodiment, the number of the non-annular projecting portions 184 is equal to the number of the shear valves 106. In the second embodiment, the tubes 127 and the non-annular projecting portions 184 are disposed alternately in the circumferential direction.

As illustrated in FIG. 3, the outer peripheral face of the annular flange 177 has a flat face portion 180. The non-annular projecting portion 184 has a rectangular parallelepiped shape, and a flat face portion 195 of the non-annular projecting portion 184 is in contact with the flat face portion 180. As illustrated in FIG. 3, the non-annular projecting portion 184 is fixed to the flange 177 with a bolt 188 in a state where the one flat face portion 195 of the non-annular projecting portion 184 is in contact with the flat face portion 180 of the flange 177.

According to the second embodiment, it is possible to shear the shear valves 106 just by forming the non-annular projecting portions 184, only at prescribed phases in the circumferential direction of the shaft member 102. The non-annular projecting portion 184 is located on a circle, which extends along the circumferential direction of the shaft member 102 and on which the other axial end portion 185 of the tube 127 is located. When a load equal to or higher than the prescribed value is applied to the tubular member or the shaft member 102, the non-annular projecting portion 184 is overlapped with the other axial end portion 185 of the tube 127 in the circumferential direction of the shaft member 102. Thus, the shearing portion for the shear valve 106 has a considerably simple structure. As a result, manufacturing cost of the shearing portion for the shear valve 106 is considerably reduced and a compact torque limiter is obtained.

In the second embodiment, the number of the non-annular projecting portions 184 is equal to the number of the shear valves 106. However, in the invention, the number of the non-annular projecting portions need not be equal to the number of the shear valves, and the number of the non-annular projecting portions of the shaft member may be any number equal to or larger than one.

In the second embodiment, the non-annular projecting portion 184 is fixed to the annular flange 177 with the bolt 188 in the state where one flat face portion 195 of the non-annular projecting portion 184 is in contact with the flat face portion 180 of the flange 177. However, in the invention, the non-annular projecting portion may be fixed to the annular flange with a fastening member such as a bolt in a state where a portion of the cylindrical inner peripheral face of the non-annular projecting portion is in contact with the cylindrical outer peripheral face of the annular projecting portion.

In the second embodiment, the non-annular projecting portion 184 is fixed to the annular flange 177, which may function as the annular projecting portion, with the bolt 188. However, in the invention, the non-annular projecting portion and the annular projecting portion may be formed as a single-piece member, and belong to the same continuous manifold.

In the second embodiment, the non-annular projecting portion 184 projects radially outward from the annular flange 177. However, in the invention, the non-annular projecting portion may radially project directly from a portion of the outer peripheral face, which is not a projecting portion of the shaft member, instead of radially projecting from the annular projecting portion. As described above, the tube shearing portion of the shaft member may have any configuration as long as the tube shearing portion is located on a circle, which extends along the circumferential direction of the shaft member and on which the other axial end portion of the tube is located, and the tube shearing portion is overlapped with the other axial end portion of the tune in the circumferential direction of the shaft member when a load equal to or higher than a prescribed value is applied to the tubular member or the shaft member.

In the invention, the axial length of the other axial end portion of the tube of the shear valve of the axial direction, which projects in the axial direction from the axial end face of the tubular member may be larger than, smaller than or equal to the axial length of the shearing portion used to shear the tube.

In the invention, the expansion chamber communication passage may have any shape as long as the expansion chamber communication passage provides communication between the shear valve fitting hole and the fluid pressure expansion chamber. In the invention, the number of the shear valves may be any number equal to or larger than one. In the invention, liquid to be sealed in the fluid pressure expansion chamber to press the inner peripheral face of the tubular member against the outer peripheral face of the shaft member need not be oil, and may be any kind of liquid other than oil. It is needless to say that new embodiments may be formulated by combining at least two configurations out of all the configurations described in the first and second embodiments and the modified examples of the embodiments.

According to the invention, it is possible to reduce the manufacturing cost of the liquid charging passage and the manufacturing cost of the shear valve shearing portion, and to obtain a compact torque limiter.

## Claims

1. A torque limiter comprising:
a shaft member (2; 102); and
a tubular member (1, 10, 11) rotatably fitted on the shaft member (2; 102), wherein
the tubular member (1, 10, 11) has
a fluid pressure expansion chamber (26) for pressing an inner peripheral face (21) of the tubular member (1, 10, 11) against an outer peripheral face (20) of the shaft member (2; 102),
a plurality of shear valve fitting holes (30) that is open on an axial end face of the tubular member (1, 10, 11) in an axial direction of the tubular member (1, 10, 11), and extend in the axial direction,
a plurality of liquid charging passages (40, 70) that communicate with the plurality of shear valve fitting holes (30), that extend in a radial direction of the tubular member (1, 10, 11) from the plurality of shear valve fitting holes (30) to an outer peripheral face (93) of the tubular member (1, 10, 11), and that open on the outer peripheral face (93) of the tubular member (1, 10, 11),
a plurality of expansion chamber communication passages (60) that provides communication between the shear valve fitting hole and the fluid pressure expansion chamber, and
a plurality of shear valves (6; 106) each of which has a tube (27; 127), one end portion of which communicates with the expansion chamber communication passage (60) and the other end portion (85; 185) of which is sealed, the tube (27; 127) projecting outward in the axial direction from the axial end face (79) of the tubular member (1, 10, 11), and the plurality of shear valves (6; 106) being fitted in the plurality of shear valve fitting holes (30), and
the shaft member (2; 102) has a tube shearing portion (84; 184) that is located on a circle, which extends along a circumferential direction of the shaft member and on which the other end portion of the tube is located, the tube shearing portion being overlapped with the other end portion of the tube in the circumferential direction of the shaft member, so as to interfere with the other axial end portion (85; 185) of the tube (27; 127) due to their relative movement, when a load equal to or higher than a prescribed value is applied to the tubular member or the shaft member.

2. The torque limiter according to claim 1, wherein:
the shaft member (2) has an annular projecting portion (77) having a tube overlapping portion (84) that is located on a circle, which extends along the circumferential direction of the shaft member (2) and on which the other end portion (85) of the tube (27) is located, the tube overlapping portion (84) being overlapped with the other end portion (85) of the tube (27) in the circumferential direction of the shaft member (2), so as to interfere with the other axial end portion (85) of the tube (27) due to their relative movement, when a load equal to or higher than the prescribed value is applied to the tubular member (1, 10, 11) or the shaft member (2), and a bottomed cutout (59) that is open on an outer peripheral face (68) of the annular projecting portion (77);
an end portion of the shear valve (6) projecting in the axial direction from the axial end face (79) of the tubular member (1, 10, 11) is accommodated in the cutout (59) so as to be apart from a wall face of the cutout (59); and
the tube shearing portion (84) is the tube overlapping portion (84).

3. The torque limiter according to claim 1, wherein:
the shaft member (102) has an annular projecting portion (177) located so as to be apart from the other end portion (185) of the tube (127) in the radial direction, and a non-annular projecting portion (184) that projects outward in the radial direction from the annular projecting portion (177) and that is located on a circle, which extends along the circumferential direction of the shaft member (102) and on which the other end portion (185) of the tube (127) is located, the non-annular projecting portion (184) being overlapped with the other end portion (185) of the tube (127) in the circumferential direction of the shaft member (102), so as to interfere with the other axial end portion (185) of the tube (127) due to their relative movement, when a load equal to or higher than the prescribed value is applied to the tubular member (1, 10, 11) or the shaft member (102);
the non-annular projecting portion (184) is allowed to be located so as to be apart from the other end portion (185) of the tube (127) in the circumferential direction; and
the tube shearing portion (184) is the non-annular projecting portion (184).

4. The torque limiter according to claim 1, wherein
the liquid charging passage (40, 70) extends radially outward from a position near the bottom portion of the shear valve fitting hole (30).

5. The torque limiter according to claim 1, wherein
the shear valve fitting holes (30) are located so as to be apart from each other in the circumferential direction; and
the phases in the circumferential direction, where the oil supply holes (40), the oil supply hole communication passages (70) and the expansion chamber communication passages (60) are present, coincide with the phases in the circumferential direction, where the shear valve fitting holes (30) are present.

6. The torque limiter according to claim 1, wherein
the axial length of the other end portion (85; 185) of the tube (27; 127) that projects outwards in the axial direction from the axial end face (79) of the tubular member (1, 10, 11) is shorter than the axial length of the tube shearing portion (84; 184) of the shaft member (2; 102).

## Patentansprüche

1. Drehmomentbegrenzer mit
einem Wellenelement (2; 102); und
einem rohrförmigen Element (1, 10, 11), das drehbar an dem Wellenelement (2; 102) angebracht ist, wobei
das rohrförmige Element (1, 10, 11)
eine Fluiddruckexpansionskammer (26) zum Drücken einer Innenumfangsfläche (21) des rohrförmigen Elements (1, 10, 11) gegen eine Außenumfangsfläche (20) des Wellenelements (2; 102),
eine Mehrzahl von Scherventilpassungslöchern (30), die an einer axialen Endfläche des rohrförmigen Elements (1, 10, 11) in einer axialen Richtung des rohrförmigen Elements (1, 10, 11) offen sind und sich in der axialen Richtung erstrecken,
eine Mehrzahl von Flüssigkeitseinfülldurchgängen (40, 70), die mit der Mehrzahl von Scherventilpassungslöchern (30) in Verbindung stehen, die sich in einer radialen Richtung des rohrförmigen Elements (1, 10, 11) von der Mehrzahl von Scherventilpassungslöchern (30) zu einer Außenumfangsfläche (93) des rohrförmigen Elements (1, 10, 11) erstrecken und die sich an der Außenumfangsfläche (93) des rohrförmigen Elements (1, 10, 11) öffnen,
eine Mehrzahl von Expansionskammerverbindungsdurchgängen (60), die eine Verbindung zwischen dem Scherventilpassungsloch und der Fluiddruckexpansionskammer bereitstellen, und
eine Mehrzahl von Scherventilen (6; 106) aufweist, die jeweils ein Rohr (27; 127) aufweist, von dem ein Endabschnitt mit dem Expansionskammerverbindungsdurchgang (60) in Verbindung steht und von dem der andere Endabschnitt (85; 185) abgedichtet ist, wobei das Rohr (27; 127) in der axialen Richtung von der axialen Endfläche (79) des röhrenförmigen Elements (1, 10, 11) nach außen vorsteht und die Mehrzahl von Scherventilen (6; 106) in die Mehrzahl von Scherventilpassungslöchern (30) eingepasst ist, und
wobei das Wellenelement (2; 102) einen Rohrscherabschnitt (84; 184) aufweist, der auf einem Kreis angeordnet ist, der sich entlang einer Umfangsrichtung des Wellenelements erstreckt und auf dem der andere Endabschnitt des Rohrs angeordnet ist, wobei sich der Rohrscherabschnitt mit dem anderen Endabschnitt des Rohrs in der Umfangsrichtung des Wellenelements überlappt, um mit dem anderen axialen Endabschnitt (85; 185) des Rohres (27; 127) aufgrund ihrer relativen Bewegung zu interferieren, wenn eine Last, die gleich einem vorgeschriebenen Wert oder höher als dieser ist, auf das rohrförmige Element oder das Wellenelement aufgebracht wird.

2. Drehmomentbegrenzer nach Anspruch 1, wobei:
das Wellenelement (2) einen ringförmig vorstehenden Abschnitt (77) mit einem Rohrüberlappungsabschnitt (84), der auf einem Kreis angeordnet ist, der sich entlang der Umfangsrichtung des Wellenelements (2) erstreckt und auf dem der andere Endabschnitt (85) des Rohrs (27) angeordnet ist, wobei sich der Rohrüberlappungsabschnitt (84) mit dem anderen Endabschnitt (85) des Rohrs (27) in der Umfangsrichtung des Wellenelements (2) überlappt, um mit dem anderen axialen Endabschnitt (85) des Rohrs (27) aufgrund ihrer relativen Bewegung zu interferieren, wenn eine Last, die gleich dem vorgeschriebenen Wert oder höher als dieser ist, auf das rohrförmige Element (1, 10, 11) oder das Wellenelement (2) aufgebracht wird, und eine Aussparung (59) mit Boden aufweist, die an einer Außenumfangsfläche (68) des ringförmigen vorstehenden Abschnitts (77) offen ist;
ein Endabschnitt des Scherventils (6), der in der axialen Richtung von der axialen Endfläche (79) des rohrförmigen Elements (1, 10, 11) vorsteht, in der Aussparung (59) so untergebracht ist, dass er von einer Wandfläche der Aussparung (59) beabstandet ist; und
der Rohrscherabschnitt (84) der Rohrüberlappungsabschnitt (84) ist.

3. Drehmomentbegrenzer nach Anspruch 1, wobei:
das Wellenelement (102) einen ringförmigen vorstehenden Abschnitt (177), der so angeordnet ist, dass er in der radialen Richtung von dem anderen Endabschnitt (185) des Rohrs (127) beabstandet ist, und einen nicht-ringförmigen vorstehenden Abschnitt (184) aufweist, der in der radialen Richtung von dem ringförmigen vorstehenden Abschnitt (177) nach außen vorsteht und der auf einem Kreis angeordnet ist, der sich entlang der Umfangsrichtung des Wellenelements (102) erstreckt und auf dem der andere Endabschnitt (185) des Rohrs (127) angeordnet ist, wobei sich der nicht-ringförmige vorstehende Abschnitt (184) mit dem anderen Endabschnitt (185) des Rohrs (127) in der Umfangsrichtung des Wellenelements (102) überlappt, um mit dem anderen axialen Endabschnitt (185) des Rohrs (127) aufgrund ihrer relativen Bewegung zu interferieren, wenn eine Last, die gleich dem vorgeschriebenen Wert oder höher als dieser ist, auf das rohrförmige Element (1, 10, 11) oder das Wellenelement (102) aufgebracht wird;
der nicht-ringförmige vorstehende Abschnitt (184) so angeordnet werden kann, dass er von dem anderen Endabschnitt (185) des Rohrs (127) in der Umfangsrichtung beabstandet ist; und
der Rohrscherabschnitt (184) der nicht-ringförmige vorstehende Abschnitt (184) ist.

4. Drehmomentbegrenzer nach Anspruch 1, wobei
der Flüssigkeitseinfülldurchgang (40, 70) sich von einer Position in der Nähe eines Bodenabschnitts des Scherventilpassungslochs (30) radial nach außen erstreckt.

5. Drehmomentbegrenzer nach Anspruch 1, wobei
die Scherventilpassungslöcher (30) so angeordnet sind, dass sie in der Umfangsrichtung voneinander beabstandet sind; und
die Phasen in der Umfangsrichtung, in denen Ölzuführungslöcher (40), Ölzuführungslochverbindungsdurchgänge (70) und die Expansionskammerverbindungsdurchgänge (60) vorhanden sind, mit den Phasen in der Umfangsrichtung übereinstimmen, in denen die Scherventilpassungslöcher (30) vorhanden sind.

6. Drehmomentbegrenzer nach Anspruch 1, wobei
die axiale Länge des anderen Endabschnitts (85; 185) des Rohrs (27; 127), der in axialer Richtung von der axialen Endfläche (79) des rohrförmigen Elements (1, 10, 11) nach außen vorsteht, kürzer ist als die axiale Länge des Rohrscherabschnitts (84; 184) des Wellenelements (2; 102).

## Revendications

1. Limiteur de couple comprenant :
un élément d'arbre (2 ; 102) ; et
un élément tubulaire (1, 10, 11) fixé de manière rotative sur l'élément d'arbre (2 ; 102), dans lequel
l'élément tubulaire (1, 10, 11) présente
une chambre d'expansion de pression de fluide (26) pour presser une face périphérique interne (21) de l'élément tubulaire (1, 10, 11) contre une face périphérique externe (20) de l'élément d'arbre (2 ; 102),
une pluralité de perforations de fixation de clapet à cisaillement (30) qui est ouverte sur une face d'extrémité axiale de l'élément tubulaire (1, 10, 11) dans une direction axiale de l'élément tubulaire (1, 10, 11), et s'étend dans la direction axiale,
une pluralité de passages de charge de liquide (40, 70) qui communique avec la pluralité de perforations de fixation de clapet à cisaillement (30), qui s'étend dans une direction radiale de l'élément tubulaire (1, 10, 11) à partir de la pluralité des perforations de fixation de clapet à cisaillement (30) jusqu'à une face périphérique externe (93) de l'élément tubulaire (1, 10, 11), et qui s'ouvre sur la face périphérique externe (93) de l'élément tubulaire (1, 10, 11),
une pluralité de passages de communication de chambre d'expansion (60) qui fournit une communication entre la perforation de fixation de clapet à cisaillement et la chambre d'expansion de pression de fluide, et
une pluralité de clapets à cisaillement (6 ; 106) dont chacun présente un tube (27 ; 127), dont une portion d'extrémité communique avec le passage de communication de chambre d'expansion (60) et l'autre portion d'extrémité (85 ; 185) est scellée, le tube (27 ; 127) faisant saillie vers l'extérieur dans la direction axiale à partir de la face d'extrémité axiale (79) de l'élément tubulaire (1, 10, 11), et la pluralité de clapets à cisaillement (6 ; 106) étant fixée dans la pluralité de perforations de fixation de clapet à cisaillement (30), et
l'élément d'arbre (2 ; 102) présente une portion de cisaillement de tube (84 ; 184) qui est disposée sur un cercle, qui s'étend le long d'une direction circonférentielle de l'élément d'arbre et sur laquelle l'autre portion d'extrémité du tube est disposée, la portion de cisaillement de tube chevauchant l'autre portion d'extrémité du tube dans la direction circonférentielle de l'élément d'arbre, afin d'interférer avec l'autre portion d'extrémité axiale (85 ; 185) du tube (27 ; 127) en raison de leur mouvement relatif, lorsqu'une charge supérieure ou égale à une valeur prescrite est appliquée à l'élément tubulaire ou l'élément d'arbre.

2. Limiteur de couple selon la revendication 1, dans lequel :
l'élément d'arbre (2) présente une portion de saillie annulaire (77) présentant une portion de chevauchement de tube (84) qui est disposée sur un cercle, qui s'étend le long de la direction circonférentielle de l'élément d'arbre (2) et sur laquelle l'autre portion d'extrémité (85) du tube (27) est disposée, la portion de chevauchement de tube (84) chevauchant l'autre portion d'extrémité (85) du tube (27) dans la direction circonférentielle de l'élément d'arbre (2), afin d'interférer avec l'autre portion d'extrémité axiale (85) du tube (27) en raison de leur mouvement relatif, lorsqu'une charge supérieure ou égale à la valeur prescrite est appliquée à l'élément tubulaire (1, 10, 11) ou l'élément d'arbre (2), et une découpe de fond (59) qui est ouverte sur une face périphérique externe (68) de la portion de saillie annulaire (77) ;
une portion d'extrémité du clapet à cisaillement (6) faisant saillie dans la direction axiale à partir de la face d'extrémité axiale (79) de l'élément tubulaire (1, 10, 11) est logée dans la découpe (59) afin d'être séparée d'une face de paroi de la découpe (59) ; et
la portion de cisaillement de tube (84) est la portion de chevauchement de tube (84).

3. Limiteur de couple selon la revendication 1, dans lequel :
l'élément d'arbre (102) présente une portion de saillie annulaire (177) disposée afin d'être séparée de l'autre portion d'extrémité (185) du tube (127) dans la direction radiale, et une portion de saillie non-annulaire (184) qui fait saillie vers l'extérieur dans la direction radiale à partir de la portion de saillie annulaire (177) et qui est disposée sur un cercle, qui s'étend le long de la direction circonférentielle de l'élément d'arbre (102) et sur laquelle l'autre portion d'extrémité (185) du tube (127) est disposée, la portion de saillie non-annulaire (184) chevauchant l'autre portion d'extrémité (185) du tube (127) dans la direction circonférentielle de l'élément d'arbre (102), afin d'interférer avec l'autre portion d'extrémité axiale (185) du tube (127) en raison de leur mouvement relatif, lorsqu'une charge supérieure ou égale à la valeur prescrite est appliquée à l'élément tubulaire (1, 10, 11) ou l'élément d'arbre (102) ;
la portion de saillie non-annulaire (184) est laissée être disposée afin d'être séparée de l'autre portion d'extrémité (185) du tube (127) dans la direction circonférentielle ; et
la portion de cisaillement de tube (184) est la portion de saillie non-annulaire (184).

4. Limiteur de couple selon la revendication 1, dans lequel
le passage de charge de liquide (40, 70) s'étend radialement vers l'extérieur à partir d'une position proche de la portion de fond de la perforation de fixation de clapet à cisaillement (30).

5. Limiteur de couple selon la revendication 1, dans lequel
les perforations de fixation de clapet à cisaillement (30) sont disposées afin d'être séparées les unes des autres dans la direction circonférentielle ; et
les phases dans la direction circonférentielle, où les perforations d'alimentation en huile (40), les passages de communication de perforation d'alimentation en huile (70) et les passages de communication de chambre d'expansion (60) sont présents, coïncident avec les phases dans la direction circonférentielle, où les perforations de fixation de clapet à cisaillement (30) sont présentes.

6. Limiteur de couple selon la revendication 1, dans lequel
la longueur axiale de l'autre portion d'extrémité (85 ; 185) du tube (27 ; 127) qui fait saillie vers l'extérieur dans la direction axiale à partir de la face d'extrémité axiale (79) de l'élément tubulaire (1, 10, 11) est plus courte que la longueur axiale de la portion de cisaillement de tube (84 ; 184) de l'élément d'arbre (2 ; 102).
